# EUROPÄISCHE PATENTANMELDUNG

(11) **EP 1 029 739 A2**
(43) Veröffentlichungstag der Anmeldung: **23.08.2000**
(21) Anmeldenummer: 00100635.2
(22) Anmeldetag: 13.01.2000
(51) Int. Cl.: B60Q 11/00, B60Q 1/38

(54) **Schaltungsanordnung für Lampen zur Fahrtrichtungsanzeige eines Kraftfahrzeuges**

(30) Priorität: 19.02.1999 DE 19906988
(71) Anmelder: DaimlerChrysler AG, 70567 Stuttgart (DE)
(72) Erfinder: Dürr, Ralph, 71069 Sindelfingen (DE)

(57) **Zusammenfassung**

Die vorliegende Erfindung betrifft eine Schaltungsanordnung für Lampen zur Fahrtrichtungsanzeige eines Kraftfahrzeugs, wobei mehrere Lampen einer Fahrzeugseite zugeordnet sind und zur Fahrtrichtungsanzeige beim Abbiegen Richtung der jeweiligen Fahrzeugseite vorgesehen sind, wobei zumindest einzelne dieser Lampen elektrisch in Reihe geschaltet sind.

## Beschreibung

Die vorliegende Erfindung betrifft eine Schaltungsanordnung zur Fahrtrichungsanzeige eines Kraftfahrzeugs, wobei mehrere Lampen einer Fahrzeugseite zugeordnet sind und zur Fahrtrichtungsanzeige beim Abbiegen in Richtung der jeweiligen Fahrzeugseite vorgesehen sind, entsprechend dem Oberbegriff des Patentanspruchs 1.

Es sind derartige Fahrtrichtungsanzeiger allgemein bekannt, bei denen infolge einer Schalterbetätigung durch den Fahrzeugführer Lampen zur Fahrtrichtungsanzeige blinkend angesteuert werden. Wenn eine der Lampen ausfällt, ändert sich damit der Ersatzwiderstand, der durch die Lampen gebildet wird. Dadurch wiederum ändert sich die Frequenz, mit der die noch funktionsfähigen Lampen bei der Ansteuerung infolge der Schalterbetätigung blinken. Zumindest für einen Fahrzeugführer, der mit dem Fahrzeug vertraut ist und dabei insbesondere auch an die übliche Blinkfrequenz bei voller Funktionsfähigkeit aller Lampen gewöhnt ist, ist diese Änderung der Blinkfrequenz wahrnehmbar. Dadurch kann also erkannt werden, daß eine (oder ggf. auch mehrere Lampen) defekt ist.

Der vorliegenden Erfindung liegt das Problem zugrunde, eine bessere Wahrnehmbarkeit zu gewährleisten, wenn einzelne oder mehrere Lampen zur Fahrtrichungsanzeige defekt sind.

Erfindungsgemäß wird dies durch eine Schaltungsanordnung nach Anspruch 1 gelöst, bei der zumindest einzelne dieser Lampen elektrisch in Reihe geschaltet sind.

Dabei erweist es sich insbesondere als vorteilhaft, daß Schaltungsanordnungen realisierbar sind, bei denen signifikante Änderungen der Widerstandswerte auch bei einem Defekt einer einzelnen Lampe auftreten. Dadurch kann vorteilhaft ein Defekt auch dann erkannt werden, wenn einer einzelnen Fabrzeugseite vergleichsweise viele Lampen zugeordnet sind. Wenn die Zahl der Lampen beispielsweise fünf oder mehr beträgt und diese in Reihe geschaltet sind anstatt parallel, erweist es sich als vorteilhaft, daß der Defekt einer einzelnen Lampe eine signifikante Änderung des Widerstandswerts (auf unendlich) bewirkt. Bei einer Parallelschaltung kann es vorkommen, daß die Änderung des Gesamtwiderstands aufgrund eines Defekts einer einzelnen Lampe unterhalb der Toleranz des Gesamtwiderstandswerts liegt, die sich dadurch ergibt, daß mehrere Lampen mit jeweils einzelnen Toleranzen parallel geschaltet sind. In dieser Konstellation wäre also ein Defekt einer einzelnen Lampe nur mit meßtechnisch entsprechend großem Aufwand meßbar.

Vorteilhaft kann also ein Defekt einer einzelnen Lampe unmittelbar bemerkt werden, ohne daß es aufgrund von Defekten von zunehmend mehr Lampen zu Funktionsbeeinträchtigungen kommt und die Fahrtrichtungsanzeige unter Umständen schon nicht mehr oder nur noch schlecht wahrnehmbar ist.

Bei der Schaltungsanordnung nach Anspruch 2 sind mehrere Lampen gruppenweise in Leuchten zusammengefaßt, wobei die Lampen zumindest einer Gruppe elektrisch in Reihe geschaltet sind, wobei die Gruppen zumindest teilweise parallel geschaltet sind.

Es kann beispielsweise auf jeder Fahrzeugseite eine Leuchte im vorderen Bereich der Stoßstange, eine Leuchte im hinteren Bereich der Stoßstange sowie eine oder mehrere weitere Leuchten vorhanden sein, die beispielsweise im Bereich des Rückspiegels angebracht sein können. In den einzelnen Leuchten, die an unterschiedlichen Orten am Fahrzeug angebracht sind, können wiederum mehrere Lampen - eine Gruppe von Lampen - untergebracht sein.

Die Anbringung im Bereich des Rückspiegels hat den Vorteil, daß dieser Teil des Fahrtrichtungsanzeigers von einem gerade vorbeifahrenden Fahrzeug aus, das sich seitlich gerade noch hinter dem Fahrzeug befindet, gut wahrnehmbar ist.

Dabei erweist es sich als vorteilhaft, wenn die Lampen einer Gruppe elektrisch in Reihe geschaltet sind. Bei einem Defekt einer Lampe kann schnell durch eine Sichtkontrolle von außen festgestellt werden, in welcher Leuchte sich die Defekte Lampe befindet, weil diese Leuchte insgesamt dunkel bleibt. Gleichzeitig ändert sich der Gesamtwiderstandswert, weil der Stromfluß durch alle Lampen der entsprechenden Leuchte verhindert wird. Es ist also auch einfach meßbar bzw. wahrnehmbar, daß ein Defekt vorliegt.

Indem aber verschiedene Gruppen, d.h. verschiedene Leuchten parallel geschaltet sind, bleibt eine Restfunktion aufrecht erhalten. Vorteilhaft kommt es also noch nicht unmittelbar zu einem Totalausfall der Fahrtrichtungsanzeige.

Bei der Schaltungsanordnung nach Anspruch 3 sind alle einer Fahrzeugseite zugeordneten Lampen elektrisch in Reihe geschaltet.

Dadurch ist ein Defekt einer einzelnen Lampe sicher wahrnehmbar.

Durch die Anbringung mehrerer Lampen in einer Leuchte können größere Flächen gleichmäßiger ausgeleuchtet werden. Außerdem können Leuchten, die gekrümmte Oberflächen aufweisen, leichter ausgeleuchtet werden.

Ein weiterer Vorteil der Reihenschaltung ist, daß an den einzelnen Lampen nur eine geringere Spannung abfällt, so daß sich deren Lebensdauer erhöht.

Ein Ausführungsbeispiel der Erfindung ist in der Zeichnung näher dargestellt. Es zeigt dabei im einzelnen:
- Fig. 1:: eine erste Schaltungsanordnung, bei der einer Fahrzeugseite zugeordnete Lampen in Gruppen zusammengefaßt sind und
- Fig. 2:: eine weitere Schaltungsanordnung, bei der einer Fahrzeugseite zugeordnete Lampen in Reihe geschaltet sind.

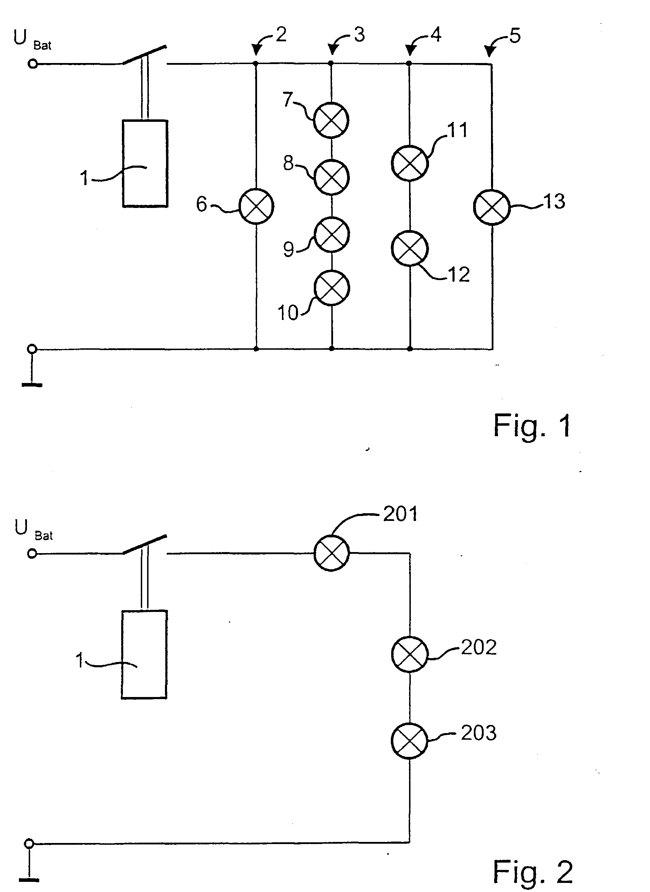

Figur 1 zeigt eine erste Schaltungsanordnung, bei der dem Fahrtrichtungsanzeiger einer Fahrzeugseite zugeordnete Lampen 6, 7, 8, 9, 10, 11, 12, 13 in Gruppen 2, 3, 4, 5 zusammengefaßt sind. Diese Gruppen enthalten eine unterschiedliche Zahl von Lampen. Die Gruppe 2 enthält die Lampe 6, die Gruppe 3 enthält die Lampen 7, 8, 9 und 10, die Gruppe 4 enthält die Lampen 11 und 12 und die Gruppe 5 enthält die Lampe 13.

Zur Fahrtrichtungsanzeige werden die Lampen 6, 7, 8, 9, 10, 11, 12, 13 durch ein Relais 1 angesteuert.

Die einzelnen Gruppen 2, 3, 4, 5 können jeweils unterschiedliche Leuchten darstellen, die an verschiedenen Stellen des Fahrzeugs angebracht sein können.

Wenn beispielsweise ein Defekt einer der Lampen 7, 8, 9, 10 auftritt, können diese Lampen einzeln in funktionsfähigem Zustand vergleichsweise niedrige Widerstandswerte aufweisen. Der Defekt wird dennoch wahrnehmbar bzw. mit vertretbarem Aufwand meßbar sein, weil der Defekt einer der Lampen 7, 8, 9 oder 10 dazu führt, daß der Stromfluß durch alle Lampen 7, 8, 9 und 10 gehindert wird.

In der gezeigten Schaltungsanordnung können die Widerstandswerte der Lampen beispielsweise gruppenweise verschieden sein, um der Tatsache Rechnung zu tragen, daß teilweise einzelne Lampen (beispielsweise 6) einer Reihenschaltung von Lampen (beispielsweise 7, 8, 9, 10) parallel geschaltet sind.

Die Lampen 7, 8, 9, 10 können beispielsweise als Lampen einer Leuchte vorgesehen sein, die im Außenspiegel des Fahrzeugs integriert ist.

Figur 2 zeigt eine weitere Schaltungsanordnung, bei der die Lampen 201, 202, 203, die einer Fahrzeugseite zugeordnet sind, vollständig elektrisch in Reihe geschaltet sind.

## Patentansprüche

1. Schaltungsanordnung für Lampen (6, 7, 8, 9, 10, 11, 12, 13, 201, 202, 203) zur Fahrtrichtungsanzeige eines Kraftfahrzeugs, wobei mehrere Lampen (6, 7, 8, 9, 10, 11, 12, 13, 201, 202, 203) einer Fahrzeugseite zugeordnet sind und zur Fahrtrichtungsanzeige beim Abbiegen in Richtung der jeweiligen Fahrzeugseite vorgesehen sind,
dadurch gekennzeichnet, daß zumindest einzelne dieser Lampen (7, 8, 9, 10; 11, 12; 201, 202, 203) elektrisch in Reihe geschaltet sind.

2. Schaltungsanordnung nach Anspruch 1,
dadurch gekennzeichnet, daß die mehreren Lampen (6, 7, 8, 9, 10, 11, 12, 13) gruppenweise in Leuchten (2, 3, 4, 5) zusammengefaßt sind, wobei die Lampen (7, 8, 9, 10; 11, 12) zumindest einer Gruppe (3, 4) elektrisch in Reihe geschaltet sind, wobei die Gruppen (2, 3, 4, 5) zumindest teilweise parallel geschaltet sind.

3. Schaltungsanordnung nach Anspruch 1,
dadurch gekennzeichnet, daß alle einer Fahrzeugseite zugeordneten Lampen (201, 202, 203) elektrisch in Reihe geschaltet sind.
